# FASCICULE DE BREVET EUROPEEN

(11) **EP 2 888 118 B1**
(45) Date de publication et mention de la délivrance du brevet: **10.07.2019**
(21) Numéro de dépôt: 13748057.0
(22) Date de dépôt: 13.08.2013
(51) Int. Cl.: B60B 3/04, B60B 29/00

(54) **ROUE DE VEHICULE, EN PARTICULIER DE VEHICULE AUTOMOBILE**
FAHRZEUGRAD, INSBESONDERE FÜR EIN KRAFTFAHRZEUG
VEHICLE WHEEL, IN PARTICULAR FOR A MOTOR VEHICLE

(30) Priorité: 21.08.2012 FR 1257900
(43) Date de publication de la demande: 01.07.2015
(73) Titulaire: PSA Automobiles SA, 78300 Poissy (FR); MW France, 02700 Tergnier (FR)
(72) Inventeur: PALPACUER, Eric, F-75013 Paris (FR); CAILLE, Eric, F-02700 Tergnier (FR); PERRIS MAGNETTO, Gabriele, I-10040 Caselette (TO) (IT); ROVARINO, Davide, I-10098 Rivoli (IT)
(74) Mandataire: Fernandez, Francis Lionel
(86) Numéro de dépôt international: PCT/EP2013/066904
(87) Numéro de publication internationale: WO 2014/029665

(56) Documents cités:
- EP-A1- 1 415 737
- EP-A2- 0 879 714
- CN-U- 202 138 147
- DE-A1- 19 928 351
- DE-A1-102005 060 202
- DE-A1-102010 020 054
- FR-A1- 2 580 550
- FR-A1- 2 580 550
- FR-A1- 2 706 366
- JP-A- 2005 000 989

## Description

L'invention concerne une roue de véhicule, en particulier de véhicule automobile. Elle concerne aussi un procédé d'assemblage d'une telle roue. Elle concerne enfin un véhicule, notamment un véhicule automobile, équipé de roues selon l'invention.

Une roue de véhicule comporte, de manière générale, d'une part, une partie centrale dite « voile », dont la forme galbée permet, avec un minimum de masse, d'obtenir une bonne résistance sans employer des matériaux épais et lourds et, d'autre part, une partie dite « jante » qui reçoit le pneumatique de la roue et qui est sensiblement cylindrique. Le voile de la roue est constitué d'une partie centrale sensiblement plane comportant une portée qui sert à centrer et à fixer la roue sur le moyeu de l'essieu du véhicule, et une partie périphérique, qui peut présenter au moins un rayon de courbure et qui se termine par un bord annulaire cylindrique destiné à la liaison du voile sur la surface interne de la jante.

On connaît les roues avec voile et jante en tôle d'acier, mais celles-ci sont trop lourdes. On connaît aussi les roues avec voile et jante en tôle d'aluminium, mais celles-ci nécessitent de fortes épaisseurs de tôle pour satisfaire les contraintes mécaniques.

Dans les roues connues de l'art antérieur, la jante et le voile peuvent être rivetés, soudés ou sertis par magnétoformage depuis la surface externe de la jante.

On connaît également, selon le document FR 2 580 550, une roue à structure composite. Dans cette roue, le profil de la jante à gorge est obtenu pour sa partie extérieure par la périphérie du voile réalisé dans un premier matériau moulé, embouti ou forgé, et pour sa partie intérieure par une pièce complémentaire réalisée dans un second matériau embouti et comportant un bord rabattu faisant face d'appui, l'ensemble étant assemblé et rendu étanche.

Le document CN-U-202 138 147 présente une roue automobile réalisée en acier et aluminium.

Le but de la présente invention est de fournir une roue de véhicule, qui permette un gain de masse relativement important par rapport à une roue en tôle d'acier tout en ayant une excellente tenue en fatigue et une bonne raideur pour le comportement dynamique. En d'autres termes, ce but de l'invention est de permettre d'obtenir une roue qui possède des qualités mécaniques proches de celles d'une roue en tôle d'acier sans être réalisée en acier.

Un autre but de la présente invention est de fournir une telle roue, qui permette, en conséquence de son allégement, une diminution des rejets de CO2 du véhicule.

Enfin, c'est également un but de la présente invention de fournir une telle roue, qui soit de conception, de fabrication et d'assemblage simples, qui soit esthétique et économique.

Pour parvenir à ces buts, la présente invention a pour objet une roue de véhicule, en particulier de véhicule automobile, composée d'un voile et d'une jante, le voile comprenant une partie centrale de fixation sur le moyeu de l'essieu du véhicule et une partie périphérique se terminant par un bord annulaire destiné à la liaison du voile avec la jante. Dans cette roue, nouvelle, le voile est réalisé à partir d'une tôle d'acier et la jante à partir d'une tôle d'aluminium. De plus, le voile et la jante sont rigidement fixés l'un à l'autre par un cordon de soudure obtenu par un procédé de soudage « CMT » (acronyme en langue anglaise de « Cold Metal Transfer » qui signifie « Transfert de métal à froid ») dont le principe de fonctionnement est rappelé dans la suite du texte.

Selon un mode préféré de réalisation de l'invention, le cordon de soudure est déposé à la fois sur la surface interne de la jante et sur la surface d'extrémité libre du bord annulaire du voile destiné à la liaison de ce dernier avec la jante.

Selon un mode préféré de réalisation de l'invention également, l'ajustement du voile sur la jante est un ajustement serré, sans « jeu ».

De préférence, le voile est ajusté sur la partie de jante dite « creux » de la jante.

La présente invention a aussi pour objet un procédé d'assemblage du voile en tôle d'acier et de la jante en tôle d'aluminium d'une roue de véhicule, le voile comprenant une partie centrale de fixation sur le moyeu de l'essieu du véhicule et une partie périphérique se terminant par un bord annulaire destiné à la liaison du voile avec la jante, ledit procédé comprenant les étapes suivantes :
- on ajuste de manière « serrée », sans jeu, le voile sur la jante de roue, le bord annulaire de la partie périphérique du voile venant s'emmancher « à force » sur la surface interne de la jante, et
- on soude par un procédé de soudage « CMT » le voile ainsi « emmanché » sur la jante, le cordon de soudure étant appliqué à la fois sur la face radiale d'extrémité libre dudit bord annulaire de la partie périphérique du voile et sur la surface interne de la jante.

De manière préférentielle, l'ajustement du voile sur la jante est réalisé de telle sorte que le bord annulaire de la partie périphérique du voile vient s'appliquer sur la surface interne de la jante, dans la partie de « creux » de la jante.

La présente invention a enfin pour objet une roue de véhicule, en particulier de véhicule automobile, qui comprend au moins une roue conforme à celle décrite ci-dessus dans ses grandes lignes et obtenue selon le procédé décrit également ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagné de dessins dans lesquels :
- la figure 1 est une demi vue de face d'une roue de véhicule automobile,
- la figure 2 est une vue en coupe, schématique, d'une roue de véhicule automobile selon la présente invention, et
- la figure 3 est une vue en coupe, agrandie, de la partie de liaison entre le voile et la jante de la roue de la figure 2.

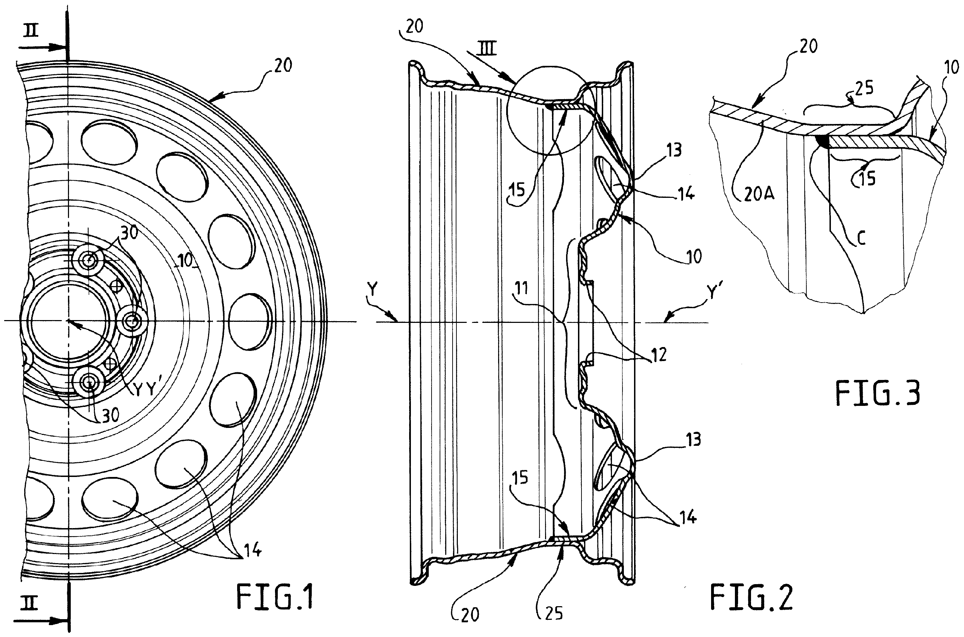

En référence aux dessins des figures 1 et 2, on a représenté une roue de véhicule automobile, d'axe YY', qui est composée d'un voile 10 et d'une jante 20 cylindrique. Le voile 10 est constitué d'une partie centrale 11 sensiblement plane comportant une portée 12 qui sert à centrer et à fixer la roue sur le moyeu de l'essieu (non représenté) du véhicule, et un partie périphérique 13, qui peut présenter au moins une partie galbée et qui se termine par un bord annulaire 15, cylindrique, destiné à la liaison du voile 10 sur la surface interne 20A (figure 3) de la jante 20. Sur le dessin de la figure 1, la référence 14 désigne des ouvertures circulaires concentriquement réparties dans la partie périphériques du voile 10 pour alléger la roue et la référence 30 les cinq vis de fixation de la roue sur le moyeu de l'essieu (non représenté) du véhicule, répartis également de manière concentrique selon un pas angulaire constant.

Selon le principe de la présente invention, le voile 10 de roue est obtenu à partir d'un flan ou tôle d'acier, de préférence par emboutissage, et la jante 20 est réalisée à partir d'une tôle d'aluminium. Selon le principe de la présente invention également, le bord annulaire 15 de la partie périphérique 13 du voile 10 est rigidement fixé à la jante 20 par un cordon de soudure obtenu par un procédé de soudage dit soudage « CMT », connu en soi. Comme mieux représenté sur le dessin de la figure 3, ce cordon de soudure, référencé « c », est déposé sur la surface interne 20A de la jante et sur la surface d'extrémité libre du bord annulaire 15 de la partie périphérique 13 du voile 10. De préférence, l'assemblage du bord annulaire 15 sur la jante 20 se fait sur la partie de la jante, qui est dite « creux » de la jante et qui est référencée 25 sur les figures 2 et 3.

Par soudage « CMT », on entend un procédé de soudage à l'arc électrique qui est une variante des procédés de soudage de type « MIG/MAG » (acronymes en langue anglaise de « Metal Inert Gas » et « Metal active Gas ») dans lesquels la fusion des métaux est obtenue par l'énergie calorifique dégagée par l'arc électrique qui éclate dans une atmosphère de protection entre un fil électrode fusible et les pièces à assembler. Dans le procédé de soudage « CMT », fruit d'une adaptation de ces procédés MIG/MAG aux besoins de l'assemblage de tôles d'acier et de tôles d'aluminium, le matériau de base aluminium fusionne en même temps que le matériau d'apport aluminium et la fusion humecte l'acier galvanisé. Le fil de soudage se déplace à intervalles rapides dans le sens opposé au sens d'avancement. Ce retour du fil défini avec précision génère un égouttement contrôlé, pour un transfert de matière propre et sans projections. Le déplacement du fil se fait à très haute fréquence et nécessite un entraînement du fil direct et réactif situé directement sur la torche de soudage.

Le procédé « CMT » est un procédé qui offre des qualités mécaniques et technologiques très satisfaisantes. Il est, de plus, très stable, très reproductible et, par conséquent, rentable économiquement.

Préalablement à l'opération de soudage, le bord annulaire 15 de la partie périphérique 13 du voile 10 est ajusté sur la paroi cylindrique interne 20A de la jante 20 selon un ajustement serré, « sans jeu ».

Ainsi, le procédé d'assemblage des deux parties de la roue (voile 10 et jante 20) comprend les étapes suivantes :
- ajustement serré, sans jeu, du voile 10 sur la jante 20, le bord annulaire 15 de la partie périphérique 13 du voile 10 venant s'emmancher « à force » sur la surface interne 20A de la jante 20, dans la partie de creux 25 de la jante 20, et
- soudage par un procédé « CMT » du voile ainsi emmanché sur la jante, le cordon de soudure « c » étant appliqué sur la face radiale d'extrémité libre dudit bord annulaire 15 de la partie périphérique 13 du voile 10 et sur la surface interne 20A de la jante 20.

Le procédé de soudage « CMT » permet un assemblage simple à mettre en oeuvre entre l'acier du voile 10 et l'aluminium de la jante 20, plus simple et plus robuste que les assemblages réalisés par voie mécanique ou par collages.

La roue décrite ci-dessus, obtenue par le procédé d'assemblage également décrit ci-dessus, présente de nombreux avantages, parmi lesquels les avantages suivants :
- elle permet de réaliser un important gain en masse par rapport à une roue réalisée en tôle d'acier, ce gain pouvant atteindre environ 10 %,
- elle permet, du fait de ce gain en masse, de diminuer les émissions de CO₂ du véhicule équipé de telles roues selon l'invention, et
- son montage sur un véhicule est sans impact sur l'architecture du véhicule.

## Revendications

1. Roue de véhicule, en particulier de véhicule automobile, composée d'un voile (10) et d'une jante (20), le voile (10) comprenant une partie centrale (11) de fixation sur le moyeu de l'essieu du véhicule et une partie périphérique (13) se terminant par un bord annulaire (15) destiné à la liaison du voile (10) avec la jante (20), ladite roue étant **caractérisée en ce que**, d'une part, le voile (10) est en tôle d'acier et la jante (20) en tôle d'aluminium et **en ce que**, d'autre part, le voile (10) et la jante (20) sont rigidement fixés l'un à l'autre par un cordon de soudure (« c ») obtenu par un procédé de soudage « CMT ».

2. Roue selon la revendication 1, **caractérisée en ce que** ledit cordon de soudure (« c ») est déposé sur la surface interne (20A) de la jante (20) et sur la surface d'extrémité libre du bord annulaire (15) du voile (10) destiné à la liaison de ce dernier avec la jante (20).

3. Roue selon l'une quelconque des revendications 1 ou 2, **caractérisée en ce que** l'ajustement du voile (10) sur la jante (20) est un ajustement serré.

4. Roue selon l'une quelconque des revendications 2 et 3, **caractérisée en ce que** le voile (10) est ajusté sur le creux (25) de la jante (20).

5. Procédé d'assemblage du voile (10) en tôle d'acier et de la jante (20) en tôle d'aluminium d'une roue de véhicule, le voile (10) comprenant une partie centrale (11) de fixation sur le moyeu de l'essieu du véhicule et une partie périphérique (13) se terminant par un bord annulaire (15) destiné à la liaison du voile (10) avec la jante (20),, ledit procédé étant **caractérisé en ce qu'**il comprend les étapes suivantes :
- on ajuste de manière « serrée », sans jeu, le voile (10) sur la jante (20) de roue, le bord annulaire (15) de la partie périphérique (13) du voile venant s'emmancher « à force » sur la surface interne (20A) de la jante (20), et
- on soude par un procédé de soudage « CMT » le voile (10) ainsi emmanché sur la jante (20), le cordon de soudure (« c ») étant appliqué sur la face radiale d'extrémité libre dudit bord annulaire (15) de la partie périphérique (13) du voile (10) et sur la surface interne (20A) de la jante (20).

6. Procédé selon la revendication 5, **caractérisé en ce que** l'ajustement du voile (10) sur la jante (20) est réalisé de telle sorte que le bord annulaire (15) de la partie périphérique (13) du voile (10) vient s'appliquer sur la surface interne (20A) de la jante (20), dans la partie de creux (25) de la jante (20).

7. Véhicule, en particulier véhicule automobile, **caractérisé en ce qu'**il comprend au moins une roue conforme à l'une quelconque des revendications 1 à 4.

## Patentansprüche

1. Rad für ein Fahrzeug, insbesondere ein Kraftfahrzeug, das aus einer Radschüssel (10) und einer Felge (20) besteht, wobei die Radschüssel (10) einen mittleren Abschnitt (11) zum Befestigen an der Nabe der Achse des Fahrzeugs und einen Umfangsabschnitt (13) umfasst, der mit einem ringförmigen Rand (15) endet, welcher zum Verbinden der Radschüssel (10) mit der Felge (20) bestimmt ist, wobei das Rad **dadurch gekennzeichnet ist, dass** einerseits die Radschüssel (10) aus Stahlblech und die Felge (20) aus Aluminiumblech besteht, und dadurch, dass andererseits die Radschüssel (10) und die Felge (20) über eine Schweißnaht ("c"), die durch ein "CMT"-Schweißverfahren erhalten wird, starr aneinander befestigt sind.

2. Rad nach Anspruch 1, **dadurch gekennzeichnet, dass** die Schweißnaht ("c") auf der Innenfläche (20A) der Felge (20) und auf der freien Endfläche des ringförmigen Rands (15) der Radschüssel (10) gelegt wird, der zum Verbinden dieser letzteren mit der Felge (20) bestimmt ist.

3. Rad nach einem der Ansprüche 1 oder 2, **dadurch gekennzeichnet, dass** die Passung der Radschüssel (10) an der Felge (20) eine Presspassung ist.

4. Rad nach einem der Ansprüche 2 und 3, **dadurch gekennzeichnet, dass** die Radschüssel (10) an das Tiefbett (25) der Felge (20) gepasst wird.

5. Verfahren zum Zusammenfügen der Radschüssel (10) aus Stahlblech und der Felge (20) aus Aluminiumblech eines Fahrzeugrades, wobei die Radschüssel (10) einen mittleren Abschnitt (11) zum Befestigen an der Nabe der Achse des Fahrzeugs und einen Umfangsabschnitt (13) umfasst, der mit einem ringförmigen Rand (15) endet, welcher zum Verbinden der Radschüssel (10) mit der Felge (20) bestimmt ist, wobei das Verfahren **dadurch gekennzeichnet ist, dass** es die folgenden Schritte umfasst:
- die Radschüssel (10) wird ohne Spiel an die Radfelge (20) "pressgepasst", wobei sich der ringförmige Rand (15) des Umfangsabschnitts (13) der Radschüssel "kraftschlüssig" auf die Innenfläche (20A) der Felge (20) schiebt, und
- die so auf die Felge (20) aufgeschobene Radschüssel (10) wird über ein "CMT"-Schweißverfahren verschweißt, wobei die Schweißnaht ("c") auf der radialen freien Endfläche des ringförmigen Rands (15) des Umfangsabschnitts (13) der Radschüssel (10) und auf der Innenfläche (20A) der Felge (20) angelegt wird.

6. Verfahren nach Anspruch 5, **dadurch gekennzeichnet, dass** die Passung der Radschüssel (10) auf der Felge (20) so ausgeführt wird, dass sich der ringförmige Rand (15) des Umfangsabschnitts (13) der Radschüssel (10) im Tiefbettabschnitt (25) der Felge (20) an die Innenfläche (20A) der Felge (20) anlegt.

7. Fahrzeug, insbesondere Kraftfahrzeug, **dadurch gekennzeichnet, dass** es mindestens ein Rad nach einem der Ansprüche 1 bis 4 umfasst.

## Claims

1. Vehicle wheel, in particular for a motor vehicle, consisting of a disc (10) and a rim (20), the disc (10) including a central portion (11) for attachment onto the hub of the axle of the vehicle and a peripheral portion (13) ending in an annular edge (15) for connecting the disc (10) to the rim (20), said wheel being **characterised in that** on the one hand the disc (10) is made from steel sheet and the rim (20) is made from aluminium sheet and **in that** on the other hand the disc (10) and the rim (20) are rigidly connected to one another by a weld bead ("c") obtained by means of a CMT welding method.

2. Wheel according to claim 1, **characterised in that** said weld bead ("c") is positioned on the inner surface (20A) of the rim (20) and on the surface of the free end of the annular edge (15) of the disc (10) designed for connecting the latter to the rim (20).

3. Wheel according to any of claims 1 or 2, **characterised in that** the adjustment of the disc (10) on the rim (20) is a tensioned adjustment.

4. Wheel according to any of claims 2 and 3, **characterised in that** the disc (10) is adjusted on the hollow part (25) of the rim (20).

5. Method for the assembly of the disc (10) made of steel sheet and the rim (20) made of aluminium sheet of a vehicle wheel, the disc (10) comprising a central part (11) for attachment onto the hub of the axle of the vehicle and a peripheral portion (13) ending in an annular edge (15) for connecting the disc (10) to the rim (20), said method being **characterised in that** it comprises the following steps:
- in a "tensioned manner", without play, the disc (10) is adjusted to the wheel rim (20), the annular edge (15) of the peripheral portion (13) of the disc engaging "by force" on the inner surface (20A) of the rim (20), and
- the disc (10) thus engaged with the rim (20) is welded by means of a CMT welding method, the weld bead ("c") being applied to the free radial end face of said annular edge (15) of the peripheral portion (13) of the disc (10) and to the inner surface (20A) of the rim (20).

6. Method according to claim 5, **characterised in that** the adjustment of the disc (10) on the rim (20) is performed such that the annular edge (15) of the peripheral portion (13) of the disc (10) attaches to the inner surface (20A) of the rim (20), in the hollow part (25) of the rim (20).

7. Vehicle, in particular a motor vehicle, **characterised in that** it comprises at least one wheel according to any of claims 1 to 4.
